# EUROPEAN PATENT SPECIFICATION

(11) **EP 3 468 016 B1**
(45) Date of publication and mention of the grant of the patent: **03.03.2021**
(21) Application number: 17195444.9
(22) Date of filing: 09.10.2017
(51) Int. Cl.: H02K 24/00, H02K 5/22

(54) **STATOR CORE FOR A VARIABLE RELUCTANCE TYPE ANGLE SENSOR**
STATORKERN FÜR EINEN WINKELSENSOR MIT VARIABLER RELUKTANZ
NOYAU DE STATOR POUR CAPTEUR D'ANGLE DE TYPE À RÉLUCTANCE VARIABLE

(43) Date of publication of application: 10.04.2019
(73) Proprietor: Tyco Electronics Belgium EC bvba, 8020 Oostkamp (BE)
(72) Inventor: BOVIJN, Pieter, 8560 Wevelgem (BE); OCKET, Tom, 8820 Torhout (BE)
(74) Representative: Grünecker Patent- und Rechtsanwälte PartG mbB

(56) References cited:
- EP-A1- 2 390 676
- JP-A- 2012 005 327
- JP-A- 2015 010 822
- US-A- 3 501 664

## Description

The present invention relates to a stator core for a variable reluctance type angle sensor, an angle sensor comprising such a stator and a rotor, and to a method of fabricating a variable reluctance type angle sensor.

Reluctance resolvers have an at least partly soft magnetic stator and an at least partly soft magnetic rotor. Rotor and stator are opposed to each other and form an air gap between each other. The reluctance within the air gap changes periodically due to the particular form of the rotor which varies around its circumference.

The angle sensor has a magnetic flux sender arranged at the stator for generating via at least one pole pair a predetermined magnetic flux distribution within the air gap. Furthermore, on the same stator a magnetic flux detector is arranged, which detects the intensity of the magnetic field by means of at least two signal pole pairs being off-set to each other by a predetermined angle. From both detector signals, an angle value can be derived for the relative position of the rotor with respect to the stator.

These magneto electric angle sensors which are based on the principle of varying magnetic flux intensity in an air gap between the stator and the rotor are known in various forms. Basically, several principles for generating the magnetic flux in the sender part and also different principles for measuring the magnetic field in the detector part are known. Resolvers and so called syncros use electromagnetic coils in the form of primary and secondary windings.

Such resolvers and syncros have the advantage to yield accurate results and to represent very robust angle sensors. In particular, so called reluctance resolvers are known, where the primary as well as the secondary windings are arranged at the stator, whereas the rotor has no windings and thus passively influences the magnetic flux circuit with specially designed magnetically soft parts. By means of an irregular form of the magnetically soft rotor, for instance by providing lobes, the magnetic flux between the primary windings and secondary windings on the stator are influenced differently, thus allowing to derive the angular position of the rotor from the induced voltage.

Various configurations of resolvers have been proposed. For instance, a system for regulating brushless DC motors of the type where an internal state or field is rotated in space 90° ahead of the rotor field is described in US 3 501 664 A. Several geometries of stator cores that include regions with inwardly extending poles separated by regions where no poles are provided are herein described.

JP 2012 005327 A describes a resolver having a rotor and a stator which includes magnetic pole parts. The form of the rotor is designed such that the gap permeance of the magnetic pole parts periodically varies in a sine wave shape as the rotor rotates. The resolver comprises a first magnetic pole part disposed at a predetermined position; a second magnetic pole part disposed at the position, in regard to the first magnetic pole part, corresponding to a phase shift by 90 degrees in the periodical change of the gap permeance; and also a third magnetic pole part disposed at the position corresponding to a phase shift by 180 degrees.

JP 2010/0510822 A relates to a technique for preventing the occurrence of a crack. A resolver includes a detection unit P and an output unit Q. The detection unit P includes a stator core and a teeth resin component as a resin component formed integrally with the stator core by injection molding. The detection unit P generates a rotation angle signal by detecting the rotation angle position of an output shaft of a motor. The output unit Q includes a terminal holding resin component as a resin component formed integrally with the stator core by injection molding. The output unit Q outputs the rotation angle signal generated by the detection unit P. The teeth resin component and the terminal holding resin component are segmented.

EP 2 390 676 A1 describes an electromagnetic coil structure having a flat conductive track, a magnetic core and a magneto electronic angle sensor.

Resolvers are superior to many other kinds of absolute position sensors because of their ruggedness, and ability to provide a very high degree of angular accuracy under severe conditions. There are no optical paths to keep clear of smoke or oils that often disrupt the operation of optical encoders. Because they are a proportional device, they are also less subject to input signal anomalies; a voltage or frequency variance will change both the sine and cosine outputs equally.

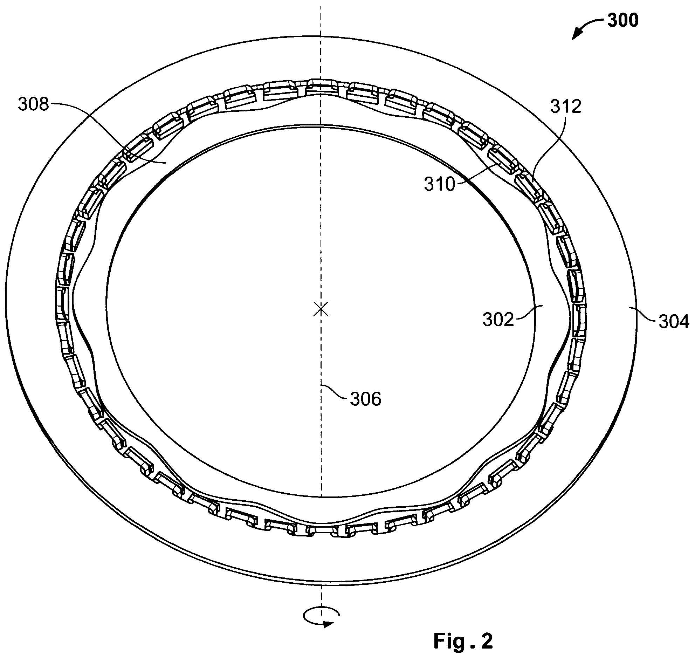

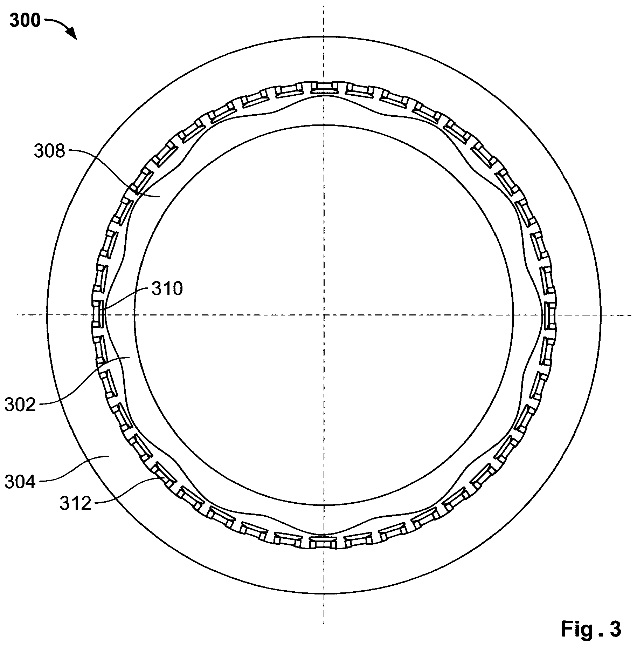

Figures 2 and 3 illustrate a conventional reluctance resolver 300. A soft magnetic rotor 302 is mounted within a ring shaped stator 304 so as to be rotatable about an axis of rotation 306. The rotor shown in this figure has 12 lobes 308 which cause during rotating about the axis 306 a variable air gap between the rotor 302 and the 40 teeth 310 (also called poles) of the stator 304. Each pole 310 carries one or more windings 312 forming an excitation winding (also referred to as primary winding) and a sine and a cosine winding (also called secondary windings). By means of the primary winding a magnetic flux is generated in the stator 304 which is influenced by the changing position of the rotating rotor 302. In the secondary windings a voltage is induced which is influenced by varying gap distance between the rotor 302 and the stator poles 310. The angular position of the rotor 302 can be derived from the induced voltage according to the well-known evaluation schemes.

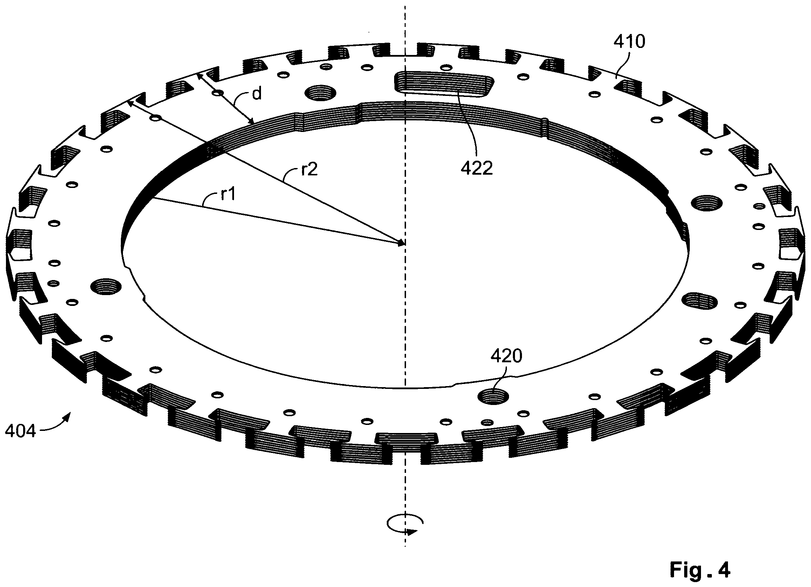

Analogously, the poles of the stator may also be oriented towards the outside of the core, the rotor being arranged around the inner stator. Fig. 4 depicts such a conventional inner stator core 404 with poles 410 being oriented towards the outside of the core. For mounting the assembled stator, mounting recesses 420 are provided for interacting with matching fixing means such as screws or bolts. Moreover, a connector opening 422 is provided that receives an electrical connector (not shown in the Figures). This electrical connector is connected to the windings arranged on the poles and allows the connection of the windings to supply, control, and evaluation means that are needed for operating the angle sensor.

However, with increasing diameters the costs for fabricating the stator and its weight are rising significantly, while the electrical connector needs to retain a certain size and format in order to be compatible with belonging mating connectors. As can be seen from Fig. 4, a distance d (i.e. the material thickness) in a radial direction being a difference between the inner radius r1 and the outer radius r2 of the stator core needs to be more than the pole height plus the radial dimension of the opening 422 for these conventional stator cores. Thus, the weight and material thickness in a radial direction may be unacceptable for various applications.

Consequently, there is a need to provide an improved stator for a reluctance resolver that is economic and simpler to fabricate, but at the same time yields accurate measurement results and is robust and long-term stable also in challenging environments.

This object is solved by the subject matter of the independent claims. Advantageous embodiments of the present invention are the subject matter of the dependent claims.

The present invention is based on the idea that for a reluctance resolver functioning as a full circle resolver, it is not necessary to use a full circle stator to be equipped with poles-a stator where specific sectors of the circumference do not carry poles surprisingly is sufficient. The other segments stator covering only a segment of the complete rotation path of the rotor interacts with a conventionally shaped turning rotor in a way that essentially the same information can be extracted as from an arrangement with a stator that covers a complete 360°.

According to the present invention, a stator core for a variable reluctance type angle sensor as described in claim 1 is provided. The stator core comprises an at least partly ferromagnetic core having a yoke and a plurality of poles (also referred to as teeth) which extend from the yoke radially inward toward or outward from a central axis of the core, wherein an excitation winding and at least one output winding can be mounted on the poles. The yoke has an essentially circular shape and said poles are arranged around the circumference of said yoke in a way that at least one pole-free region is provided in a first segment of the circumference, the pole-free region comprising an opening through the yoke for receiving a connector, wherein no poles are arranged in the first segment comprising the pole-free region.

This geometry is advantageous because the radial material thickness of the stator core can be reduced significantly. This is due to the effect that the difference between the inner radius and the outer radius does not have to be dimensioned large enough to radially accommodate the connector opening and the height of the poles, but only the one or the other. In other words, by providing a divide in the conventionally uninterrupted series of stator poles, the zone for the connection part can be located at the same diameter as the poles. Consequently, the stator core is much lighter and needs less installation space in a radial direction. This is particularly advantageous when fabricating resolvers with large diameters of e. g. 30 cm.

The present invention may be used with stator cores having poles which extend from the yoke radially inward toward or outward from the central axis of the core, however, it is particularly advantageous for cores with outwardly pointing teeth, because with those inner stator cores there is even less space available for accommodating the connector to the external electronic components compared to the geometry of outer stator cores.

According to the present invention, one or more zones (also called segments in the following) with poles can be provided. In contrast to conventional stator cores where an even number of poles is distributed equidistantly around the 360° perimeter of the core, according to the present invention the poles can be arranged at an angle that would not add up to an even or an integer number of poles over the whole circle. Wiring the windings is also more economic because fewer coils are needed, whereby the cycle time is reduced. Also all other components like the overmolding tools for the coils and covers become less expensive.

According to an advantageous embodiment, said opening has an elongated shape covering an angle of between 20° to 30° of the circumference of said yoke. This leaves enough room for arranging poles on the remaining perimeter of the stator core. Advantageously, the shape of the opening follows the circular contour of the core, being arranged between the outer circumference and the inner circumference of the core.

In order to provide point symmetry of the poles and thus of the windings, no poles may be arranged in a second segment which is opposed to the first segment. This second pole-free segment may advantageously be used for accommodating mounting means, such as recesses for bolts or screws. Advantageously, the stator core comprises at least one mounting recess for attaching fixing means to mount the stator core.

According to an advantageous embodiment, a first group of poles is arranged in a third segment, and a second group of poles is arranged in a fourth segment, the third and fourth segment being arranged point symmetrically opposing to each other with respect to a center of said yoke. In this manner, winding schemes can be employed that achieve an operation with characteristics close to those for cores with a full circle of poles. In particular, the first and second group of poles may comprise an identical number of poles.

Advantageously, said third and fourth segment each extend along a circular arc around said central axis to cover an angle of between 90° and 120°. This geometry leaves enough room for the connector and additional fixing means, but at the same time allows an operation of the resolver similar to a resolver with a conventional full circle stator core.

The present invention further relates to a variable reluctance type angle sensor comprising a stator with an at least partly ferromagnetic stator core according to the present invention. An excitation winding and at least one output winding are mounted on the poles. A rotor is operable to rotate around a central rotational axis with respect to the stator and has such a shape that a gap permeance varies in a sine wave manner with respect to an angle of rotation around the central rotational axis. The yoke has an essentially circular shape arranged around said central rotational axis.

According to an advantageous embodiment of the present invention, said stator core has at least four poles that are distributed around said central rotational axis to cover at least one electrical period of the rotor. This is the smallest possible configuration for the stator being able to function with a standard rotor as a full-fledged reluctance resolver.

Advantageously, the at least four poles carry a primary winding and a sine and a cosine secondary windings.

A multitude of different wiring schemes can be used for the windings provided at those segments of the stator which carry the poles. In order to reduce the effect of the magnetic flux deviating at the outside poles, a winding scheme can be provided where the peripheral poles carry only a primary winding. Moreover, the number and/or the direction of the windings may differ from pole to pole. In particular, the number of winding turns around peripheral poles of the stator may be lower than the number of winding turns around the inner poles.

In order to reduce the eccentricity of the geometry and to achieve a satisfactory angular accuracy, two segments carrying the poles can be arranged opposite to each other. According to an advantageous embodiment, the angle sensor therefore comprises a stator with two pole-carrying segments which each cover a yoke angle of less than 180°, wherein the two segments are arranged symmetrically to each other with respect to said central rotational axis. For instance, the pole-carrying segments each cover an angle of about 90° to 120°.

In order to achieve a high degree of symmetry and thus compensate for the eccentricity, the windings in the third segment may be distributed on the poles with point symmetry to the distribution of the windings in the fourth segment, wherein the origin of the point symmetry is the point where the rotational axis intersects the plane defined by the rotor. Alternatively, the windings in the third segment may be distributed on the poles with point symmetry to the distribution of the windings in the fourth segment, but with inverted winding direction.

The advantages of the present invention can best be exploited with the stator being fabricated from stamped and layered ferromagnetic lamellae.

The present invention further relates to a method of fabricating a variable reluctance type angle sensor, the method comprising the following steps:
fabricating a rotor operable to rotate around a central rotational axis of the angle sensor, the rotor having such a shape that a gap permeance varies in a sine wave manner with respect to an angle of rotation around the central rotational axis;
fabricating at least one stator with an at least partly ferromagnetic core according to the present invention;
attaching windings to said poles, wherein an excitation winding and at least one output winding are mounted on the poles;
assembling the rotor with the stator in a way that the rotor is operable to rotate around the central rotational axis with respect to the stator;
attaching the windings to a connector and assembling said connector at the stator core to be held within said opening.

As already mentioned above, this method allows for a reduced cycle time for the assembly, and saves material and costs.

A particularly easy way of attaching the windings to the poles of the stator is to attach an electrically insulating coil body for each pole with at least one winding, and mounting the coil bodies on the poles.

In order to provide a uniform magnetic flux through those poles of the stator that carry the output windings, the stator may be fabricated in a way that the stator has a first and a second peripheral pole and a plurality of inner poles, wherein the number of turns of the windings on the first and second peripheral pole differs from the number of turns of the windings on the inner poles.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. The following described embodiments thus can be considered either alone or in an arbitrary combination thereof. Further features and advantages will become apparent from the following more particular description of the various embodiments of the invention, as illustrated in the accompanying drawings, in which like references refer to like elements, and wherein:
**FIG. 1** is a schematic top view of stator core for a reluctance resolver according to an advantageous embodiment;
**FIG. 2** is a schematic perspective view of a conventional outer stator reluctance resolver;
**FIG. 3** is a schematic plan view of the conventional reluctance resolver shown in Fig. 2;
**FIG. 4** is a schematic perspective view of a conventional inner stator reluctance resolver.

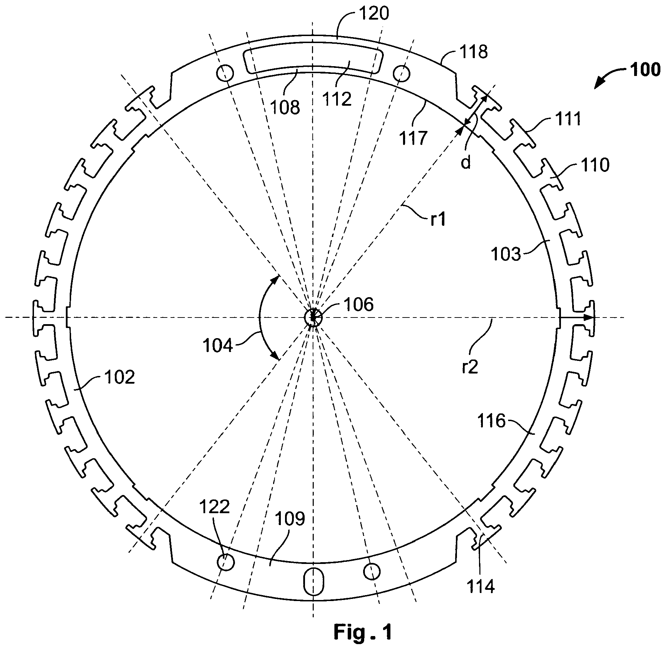

The present invention will now be explained in more detail with reference to the Figures. When first turning to Fig. 1, a schematic plan view of a stator core 100 for a reluctance resolver according to an embodiment of the present invention is shown. The stator core 100 is fabricated from stamped and stacked ferromagnetic metal sheets as this is known for a person skilled in the art. A plurality of poles 110 are arranged at the outer circumference of a yoke 116 of the core 100.

According to the present invention, the poles 110 form two groups of poles arranged in two opposing segments of the stator core 100. The poles are arranged point-symmetrically with respect to the central point intersecting the rotational axis 106. According to the embodiment shown in Fig. 1, the segments 102 carrying poles 110 cover an angle of approximately 100°.

Consequently, according to the present invention, the poles 110 are not distributed around the complete circumference of the core 100, but leave two zones 108, 109 without any poles 110. A connector opening 112 is arranged in the first pole-free segment 108. In this manner, a comparatively small radial thickness d (which is defined as the difference between the outer radius r2 and the inner radius r1) can be achieved. End faces 111 of the poles 110 follow the contour of the outer circumference 118 having the outer radius r2. The connector opening 112 is inscribed between the inner circumference 117 and the outer circumference 118, with only narrow webs 120 ensuring mechanical stability.

The connector opening 112 has an elongated shape and covers an angle of between 20° to 30° of the circumference of the yoke 116. This leaves enough room for arranging the poles 110 on the remaining perimeter of the stator core 100. Advantageously, the shape of the opening follows the circular contour of the core, being arranged between the outer circumference 118 and the inner circumference 117 of the core 100.

In contrast to the conventional arrangements shown in Fig. 2 to 4, the poles of the stator core do not extend around the complete circumference, but cover an angle 104 which is smaller than 360°. The inventors of the present invention found that surprisingly a stator where the poles cover a much smaller segment of the circumference than the full circle, e. g. approximately 90° to 120°, is sufficient for exciting and picking up a signal that has a satisfactory angular accuracy.

As shown in Fig. 1, the stator core 10 comprises two groups of poles with 11 poles each which are extending outwardly from the rotational axis 106 from a yoke 116. It should be noted that the idea according to the present invention may of course also be applied to a resolver with an inner rotor, where poles of the stator extend inwardly towards the rotational axis 106, although Figure 1 shows an embodiments with an outer rotor.

This number of poles 110 is equivalent to more than ¼ of the number (28) of poles 310 of the full-circle stator 300 (corresponding to 90° being a quarter of the full circle) plus one additional peripheral pole 114 at each side of each group of poles.

It is clear for a person skilled in the art that the pole-carrying segments may cover any other fraction of a full circle, as long as four or more poles are provided which are distributed over at least one electrical period of the rotor. According to an advantageous embodiment, seven poles are distributed over two electrical periods.

For mounting the status core 100, mounting recesses for attaching fixing means such as bolts or screws are provided in the pole-free segments 108. In Fig. 1, these recesses 120 are formed by holes that pass through the entire stator core 100.

It could be shown that a reluctance resolver using a stator core 100 as shown in Fig. 1 can be operated in the same manner as the conventional full circle resolvers.

For operating the resolver any suitable winding scheme can be used, as this is known for a person skilled in the art. For instance, the peripheral poles 114 may carry only a primary winding, but no secondary winding. These additional excitation windings serve the purpose to compensate for a deviation of the magnetic flux at the extreme ends of the pole-carrying segments 102. Preferably, the number of turns at these peripheral excitation windings is higher or lower than the number of turns for the remaining poles.

### REFERENCE NUMERALS

| **Reference Numeral** | **Description** |
|---|---|
| 100 | Stator core for a reluctance resolver |
| 102, 103 | Segment with poles |
| 104 | Angle of segment with poles |
| 106 | Rotational axis |
| 108, 109 | Segments without poles |
| 110 | Pole |
| 111 | End face |
| 112 | Connector opening |
| 114 | Peripheral pole |
| 116 | Yoke |
| 117 | Inner circumference |
| 118 | Outer circumference |
| 120 | Web |
| 122 | Mounting recess |
| 300 | Conventional resolver |
| 302 | Rotor |
| 304 | Stator |
| 306 | Rotational axis |
| 308 | Lobe of rotor |
| 310 | Pole |
| 312 | Winding |
| 404 | Conventional inner stator core |
| 420 | Mounting recess |
| 422 | Connector opening |

## Claims

1. Stator core for a variable reluctance type angle sensor, said stator core (100) comprising:
an at least partly ferromagnetic core having a yoke (116) and a plurality of poles (110) which extend from the yoke (116) radially inward toward or outward from a central axis (106) of the core (100), wherein an excitation winding and at least one output winding can be mounted on the poles (110),
wherein the yoke (116) has an essentially circular shape and wherein said poles (110) are arranged around a circumference of said yoke (116) in a way that at least one pole-free region is provided in a first segment (108) of the circumference, wherein no poles (110) are arranged in the first segment (108) comprising the pole-free region;
**characterized in that**
the first segment (108) comprises a connector opening (112) passing through the yoke (116) for receiving a connector so that the connector opening (112) is located within a same radial distance from the central axis (106) as the poles (110).

2. Stator core according to claim 1, wherein said connector opening (112) has an elongated shape covering an angle of between 20° to 30° of the circumference of said yoke (116).

3. Stator core according to one of the preceding claims, wherein no poles are arranged in a second segment (109) which is opposed to the first segment (108).

4. Stator core according to one of the preceding claims, wherein a first group of poles is arranged in a third segment (102), and a second group of poles is arranged in a fourth segment (103), the third and fourth segment being arranged point symmetrically opposing to each other with respect to a center (106) of said yoke (116).

5. Stator core according to claim 4, wherein the first and second group of poles comprise an identical number of poles.

6. Stator core according to claim 3 or 4, wherein said third and fourth segment (102, 103) each extend along a circular arc around said central axis (106) to cover an angle (104) of between 90° and 120°.

7. Stator core according to the preceding claims, further comprising at least one mounting recess (122) for attaching fixing means to mount the stator core (100).

8. A variable reluctance type angle sensor comprising:
a stator with Z stator core (100) according to one of the preceding claims, wherein an excitation winding and at least one output winding are mounted on the poles (110),
a rotor which is operable to rotate around a central rotational axis (106) with respect to the stator and has such a shape that a gap permeance varies in a sine wave manner with respect to an angle of rotation around the central rotational axis (106).
wherein the yoke (116) has an essentially circular shape arranged around said central rotational axis (106).

9. Angle sensor according to claim 8, wherein said stator has at least four poles (110) that are distributed around said central rotational axis (106) to cover at least one electrical period of the rotor.

10. Angle sensor according to claim 9, wherein said at least four poles (110) carry a primary winding and a sine and/or a cosine secondary windings.

11. Angle sensor according to one of the claims 8 to 10, wherein the number and/or the direction of the windings differ from pole to pole.

12. Angle sensor according to one of the 8 to 11, wherein said stator core (100) is fabricated from stamped and layered ferromagnetic lamellae.

13. Method of fabricating a variable reluctance type angle sensor, the method comprising the following steps:
fabricating a rotor operable to rotate around a central rotational axis (106) of the angle sensor, the rotor having such a shape that a gap permeance varies in a sine wave manner with respect to an angle of rotation around the central rotational axis (106);
fabricating a stator with a stator core (100) according to one of the claims 1 to 7;
attaching windings to said poles (110), wherein an excitation winding and at least one output winding are mounted on the poles (110);
assembling the rotor with the stator in a way that the rotor is operable to rotate around the central rotational axis (106) with respect to the stator;
attaching the windings to a connector and assembling said connector at the stator core (100) to be held within said connector opening (112).

14. Method according to claim 13, wherein the step of attaching windings to the poles (110) comprises providing an electrically insulating coil body for each pole with at least one winding, and mounting the coil bodies on the poles.

## Patentansprüche

1. Statorkern für einen Winkelsensor mit variabler Reluktanz, wobei der Statorkern (100) umfasst:
einen wenigstens teilweise ferromagnetischen Kern mit einem Joch (116) und einer Vielzahl von Polen (110), die sich von dem Joch (116) radial nach innen zu oder nach außen von einer Mittelachse (106) des Kerns (100) erstrecken, wobei eine Erregerwicklung und wenigstens eine Ausgangswicklung an den Polen (110) montiert werden können,
wobei das Joch (116) eine im Wesentlichen kreisförmige Form hat und wobei die Pole (110) um einen Umfang des Jochs (116) in einer Weise angeordnet sind, dass wenigstens ein polfreier Bereich in einem ersten Segment (108) des Umfangs bereitgestellt wird, wobei keine Pole (110) in dem ersten Segment (108) angeordnet sind, das den polfreien Bereich umfasst;
**dadurch gekennzeichnet, dass**
das erste Segment (108) eine Verbinderöffnung (112) umfasst, die durch das Joch (116) zum Aufnehmen eines Verbinders geführt wird, so dass sich die Verbinderöffnung (112) in einem gleichen radialen Abstand von der Mittelachse (106) befindet ist wie die Pole (110).

2. Statorkern nach Anspruch 1, wobei die Verbinderöffnung (112) eine längliche Form hat, die einen Winkel zwischen 20° und 30° des Umfangs des Jochs (116) abdeckt.

3. Statorkern nach einem der vorhergehenden Ansprüche, wobei keine Pole in einem zweiten Segment (109) angeordnet sind, das dem ersten Segment (108) gegenüberliegt.

4. Statorkern nach einem der vorhergehenden Ansprüche, wobei eine erste Gruppe von Polen in einem dritten Segment (102) angeordnet ist und eine zweite Gruppe von Polen in einem vierten Segment (103) angeordnet ist, wobei das dritte und vierte Segment punktsymmetrisch einander gegenüberliegend mit Bezug auf einen Mittelpunkt (106) des Jochs (116) angeordnet sind.

5. Statorkern nach Anspruch 4, wobei die erste und zweite Gruppe von Polen eine identische Anzahl von Polen umfassen.

6. Statorkern nach Anspruch 3 oder 4, wobei sich das dritte und vierte Segment (102, 103) jeweils entlang eines Kreisbogens um die Mittelachse (106) erstrecken, um einen Winkel (104) von zwischen 90° und 120° abzudecken.

7. Statorkern nach einem der vorhergehenden Ansprüche, der des Weiteren wenigstens eine Montageaussparung (122) zum Anbringen einer Befestigungseinrichtung umfasst, um den Statorkern (100) zu montieren.

8. Winkelsensor mit variabler Reluktanz, der umfasst:
einen Stator mit einem Statorkern (100) nach einem der vorhergehenden Ansprüche, wobei eine Erregerwicklung und wenigstens eine Ausgangswicklung an den Polen (110) montiert sind,
einen Rotor, der um eine Rotationsmittelachse (106) mit Bezug auf den Stator rotieren kann und eine derartige Form hat, dass eine Spaltdurchlässigkeit sinuswellenartig mit Bezug auf einen Rotationswinkel um die Rotationsmittelachse (106) variiert.
wobei das Joch (116) eine im Wesentlichen kreisförmige Form hat, die um die Rotationsmittelachse (106) angeordnet ist.

9. Winkelsensor nach Anspruch 8, wobei der Stator wenigstens vier Pole (110) hat, die um die Rotationsmittelachse (106) verteilt sind, um wenigstens eine elektrische Periode des Rotors abzudecken.

10. Winkelsensor nach Anspruch 9, wobei die wenigstens vier Pole (110) eine Primärwicklung und eine Sinus- und/oder eine Cosinus-Sekundärwicklung tragen.

11. Winkelsensor nach einem der Ansprüche 8 bis 10, wobei sich die Anzahl und/oder die Richtung der Wicklungen von Pol zu Pol unterscheiden.

12. Winkelsensor nach einem der Ansprüche 8 bis 11, wobei der Statorkern (100) aus gestanzten und geschichteten ferromagnetischen Lamellen gefertigt ist.

13. Verfahren zur Herstellung eines Winkelsensors mit variabler Reluktanz, wobei das Verfahren die folgenden Schritte umfasst:
Fertigen eines Rotors, der um eine Rotationsmittelachse (106) des Winkelsensors rotieren kann, wobei der Rotor eine derartige Form hat, dass eine Spaltdurchlässigkeit sinuswellenartig mit Bezug auf einen Rotationswinkel um die Rotationsmittelachse (106) variiert;
Fertigen eines Stators mit einem Statorkern (100) nach einem der Ansprüche 1 bis 7;
Anbringen von Wicklungen an den Polen (110), wobei eine Erregerwicklung und wenigstens eine Ausgangswicklung an den Polen (110) montiert sind;
Montage des Rotors mit dem Stator in einer Weise, dass der Rotor um die Rotationsmittelachse (106) mit Bezug auf den Stator rotieren kann;
Anbringen der Wicklungen an einem Verbinder und Montage des Verbinders am Statorkern (100), so dass er in der Verbinderöffnung (112) gehalten wird.

14. Verfahren nach Anspruch 13, wobei der Schritt zum Anbringen von Wicklungen an den Polen (110) das Bereitstellen eines elektrisch isolierenden Spulenkörpers für jeden Pol mit wenigstens einer Wicklung und das Montieren der Spulenkörper an den Polen umfasst.

## Revendications

1. Noyau de stator pour un capteur d'angle de type à réluctance variable, ledit noyau de stator (100) comprenant :
un noyau au moins partiellement ferromagnétique ayant une culasse (116) et une pluralité de pôles (110) qui s'étendent à partir de la culasse (116) radialement vers l'intérieur en direction d'un axe central (106) du noyau (100), ou vers l'extérieur par rapport à celui-ci, dans lequel un enroulement d'excitation et au moins un enroulement de sortie peuvent être montés sur les pôles (110),
dans lequel la culasse (116) a une forme essentiellement circulaire et dans lequel lesdits pôles (110) sont disposés autour d'une circonférence de ladite culasse (116) de telle sorte qu'au moins une région sans pôle est prévue dans un premier segment (108) de la circonférence,
dans lequel aucun pôle (110) n'est agencé dans le premier segment (108) comprenant la région sans pôle ;
**caractérisé en ce que**
le premier segment (108) comprend une ouverture de connecteur (112) passant à travers la culasse (116) pour recevoir un connecteur de sorte que l'ouverture de connecteur (112) est située à une même distance radiale par rapport à l'axe central (106) que les pôles (110).

2. Noyau de stator selon la revendication 1, dans lequel ladite ouverture de connecteur (112) a une forme allongée couvrant un angle compris entre 20° et 30° de la circonférence de ladite culasse (116).

3. Noyau de stator selon l'une des revendications précédentes, dans lequel aucun pôle n'est disposé dans un deuxième segment (109) qui est en vis-à-vis du premier segment (108).

4. Noyau de stator selon l'une des revendications précédentes, dans lequel un premier groupe de pôles est agencé dans un troisième segment (102), et un second groupe de pôles est agencé dans un quatrième segment (103), les troisième et quatrième segments étant agencés en vis-vis centralement symétrique l'un à l'autre par rapport à un centre (106) de ladite culasse (116).

5. Noyau de stator selon la revendication 4, dans lequel
le premier et le second groupe de pôles comprennent un nombre identique de pôles.

6. Noyau de stator selon la revendication 3 ou 4, dans lequel lesdits troisième et quatrième segments (102, 103) s'étendent chacun le long un arc de cercle autour dudit axe central (106) pour couvrir un angle (104) compris entre 90° et 120°.

7. Noyau de stator selon les revendications précédentes, comprenant en outre au moins un évidement de montage (122) pour attacher des moyens de fixation pour monter le noyau de stator (100).

8. Capteur d'angle de type à réluctance variable comprenant :
un stator ayant un noyau de stator (100) selon l'une des revendications précédentes, dans lequel un enroulement d'excitation et au moins un enroulement de sortie sont montés sur les pôles (110),
un rotor qui est opérationnel pour tourner autour d'un axe de rotation central (106) par rapport au stator et qui a une forme telle qu'une perméance d'entrefer varie d'une manière sinusoïdale par rapport à un angle de rotation autour de l'axe de rotation central (106),
dans lequel la culasse (116) a une forme essentiellement circulaire disposée autour dudit axe de rotation central (106).

9. Capteur d'angle selon la revendication 8, dans lequel ledit stator comporte au moins quatre pôles (110) qui sont répartis autour dudit axe de rotation central (106) pour couvrir au moins une période électrique du rotor.

10. Capteur d'angle selon la revendication 9, dans lequel lesdits au moins quatre pôles (110) supportent un enroulement primaire et des enroulements secondaires de type sinus et/ou cosinus.

11. Capteur d'angle selon l'une des revendications 8 à 10, dans lequel le nombre et/ou la direction des enroulements diffèrent d'un pôle à l'autre.

12. Capteur d'angle selon l'une des revendications 8 à 11, dans lequel ledit noyau de stator (100) est fabriqué à partir de lamelles ferromagnétiques estampées et stratifiées.

13. Procédé de fabrication d'un capteur d'angle de type à réluctance variable, le procédé comprenant les étapes suivantes :
la fabrication d'un rotor opérationnel pour tourner autour d'un axe de rotation central (106) du capteur d'angle, le rotor ayant une forme telle qu'une perméance d'entrefer varie d'une manière sinusoïdale par rapport à un angle de rotation autour de l'axe de rotation central (106) ;
la fabrication d'un stator ayant un noyau (100) selon l'une des revendications 1 à 7 ;
la fixation d'enroulements auxdits pôles (110), dans lequel un enroulement d'excitation et au moins un enroulement de sortie sont montés sur les pôles (110) ;
l'assemblage du rotor avec le stator de manière à ce que le rotor soit opérationnel pour tourner autour de l'axe de rotation central (106) par rapport au stator ;
la fixation des enroulements à un connecteur et l'assemblage dudit connecteur au niveau du noyau de stator (100) pour être maintenu dans ladite ouverture de connecteur (112).

14. Procédé selon la revendication 13, dans lequel l'étape de fixation des enroulements aux pôles (110) comprend la fourniture d'un corps de bobine électriquement isolant pour chaque pôle avec au moins un enroulement, et le montage des corps de bobine sur les pôles.
